# FASCICULE DE BREVET EUROPEEN

(11) **EP 0 718 248 B1**
(45) Date de publication et mention de la délivrance du brevet: **19.04.2000**
(21) Numéro de dépôt: 95402773.6
(22) Date de dépôt: 11.12.1995
(51) Int. Cl.: C03C 8/14

(54) **Procédé d'émaillage de substrats en verre et composition utilisée**
Verfahren zur Emaillierung von Glassubstraten und dafür verwendete Zusammensetzung
Process for the enamelling of glass substrates and composition used therefor

(30) Priorité: 23.12.1994 FR 9415564
(43) Date de publication de la demande: 26.06.1996
(73) Titulaire: SAINT-GOBAIN VITRAGE, 92400 Courbevoie (FR)
(72) Inventeur: Beyrle, André, F-60170 Tracy-le-Val (FR)
(74) Mandataire: Muller, René

(56) Documents cités:
- EP-A- 0 201 241
- EP-A- 0 565 881
- EP-A- 0 598 199
- WO-A-93/11078

## Description

La présente invention concerne un procédé d'émaillage de substrats en verre, la composition utilisée dans ledit procédé et les produits émaillés obtenus.

Les émaux sont bien connus dans l'état de la technique et sont utilisés, notamment, pour revêtir des substrats en verre, tels que des vitrages, dans l'industrie automobile ou l'industrie du bâtiment. Ils permettent, entre autres, de former des inscriptions ou des couches décoratives, des couches conductrices pour résistances chauffantes ou antennes radio, ou encore des couches protectrices... Ainsi, dans les vitrages automobiles, les émaux sont utilisés pour cacher des bandes collectrices de réseaux chauffants ou pour cacher et protéger les réseaux chauffants eux-mêmes. Ils peuvent également constituer lesdits réseaux chauffants. Ils sont aussi utilisés pour protéger des cordons de collage servant au montage des vitrages dans les baies de carrosserie contre les rayonnements U.V., en même temps qu'ils masquent lesdits cordons.

Les émaux utilisés pour revêtir des substrats en verre sont généralement formés d'une poudre comprenant une fritte de verre et des pigments, la fritte et les pigments étant à base d'oxydes métalliques, et d'un médium ou « véhicule » permettant l'application et l'adhésion temporaire de l'émail sur un substrat. Le médium, choisi selon la destination de l'émail, doit assurer une bonne mise en suspension des particules des frittes utilisées et doit se consumer totalement au plus tard lors de la cuisson de l'émail. Ce médium peut comporter des solvants, des diluants, des huiles, des résines, etc...

De manière générale, le revêtement d'un substrat en verre, tel qu'un vitrage, par un émail s'opère de la façon suivante : l'émail est déposé par sérigraphie sur les parties choisies du substrat, puis la couche d'émail obtenue est séchée et/ou polymérisée pour permettre son adhésion sur le verre ; d'autres couches d'émail peuvent également être déposées sur la première couche obtenue, chaque couche étant séchée et/ou polymérisée avant dépôt de la suivante, l'ensemble des couches émaillées étant ensuite traité thermiquement à température élevée afin d'éliminer le restant du médium, de cuire l'émail et d'obtenir le revêtement définitif. Ce traitement à température élevée est généralement lié au traitement thermique utilisé pour la transformation du substrat en verre, par exemple pour le bombage du substrat en verre.

Plusieurs problèmes peuvent se poser dans les procédés d'émaillage de substrats en verre, notamment lorsque les substrats émaillés sont soumis à des opérations de bombage, le bombage et la cuisson de l'émail s'opérant généralement conjointement, comme mentionné précédemment. Au cours des opérations de bombage, il arrive souvent que les émaux, au contact des matrices de bombage, adhèrent auxdites matrices et aient tendance à se désolidariser des feuilles de verre.

Ce problème de collage est traditionnellement résolu en utilisant des émaux désignés sous le terme d'émaux « anti-adhésifs » ou « anti-stick », lesdits émaux n'adhérant pas ou adhérant peu lors de leur cuisson aux matrices de bombage des substrats en verre. Parmi les émaux anti-adhésifs, on peut citer notamment les émaux comprenant des frittes présentant des composants formant des phases cristallines (comme décrit dans le document WO 93/11078), ces émaux pouvant éventuellement comprendre Bi₂O₃ à titre de promoteur de cristallisation. Les émaux anti-adhésifs les plus courants consistent cependant en des émaux traditionnels auxquels ont été ajoutés des métaux oxydables sous forme de poudres, lesdits métaux s'oxydant lors du traitement thermique de cuisson de l'émail et conférant, semble t'il, du fait de cette oxydation, des propriétés anti-adhésives aux émaux. De tels émaux sont décrits, par exemple, dans le brevets US 4 684 389, US 4 857 096, EP 0 362 136, EP 0 326 519, US 4 959 090, US 4 983 196 et EP 0 490 611. Cependant, la vitesse peu élevée d'oxydation des métaux limite la productivité au sein des procédés d'émaillage de substrats en verre. Une solution pour accélérer l'oxydation des métaux dans les émaux précédemment cités est déjà connue et est décrite dans le brevet EP 0 490 611. Cette solution consiste à diriger un courant de gaz contenant de l'oxygène sur l'émail pendant le traitement thermique à haute température de celui-ci. L'utilisation d'un gaz contenant de l'oxygène à haute température (de l'ordre de 650°C dans les procédés d'émaillage et bombage traditionnels) n'est cependant pas sans danger et nécessite l'installation de dispositifs supplémentaires ou l'adaptation des dispositifs existants ainsi que la prise de précautions supplémentaires dans le procédé d'émaillage de substrats en verre. De plus, si l'oxydation des métaux est accélérée, cette oxydation n'est malgré tout pas complète, une partie des métaux n'étant pas oxydée au cours du procédé. Un procédé tel que décrit dans le brevet EP 0 490 611 n'est par conséquent pas satisfaisant.

Si des problèmes se posent lors du bombage de substrats en verre émaillés pris individuellement (par exemple des vitrages monolithiques), des problèmes se posent à plus forte raison dans le cas du bombage simultané de plusieurs substrats en verre entre lesquels se trouve un émail à cuire. En effet, des problèmes tels que la mauvaise évacuation hors de l'espace intercalaire entre les substrats en verre de produits de réaction gazeux ou la mauvaise cuisson de l'émail, notamment la mauvaise combustion de la résine généralement présente dans le médium dudit émail (ceci entraînant la plupart du temps la formation d'une auréole entre les substrats en verre), viennent également s'ajouter, dans ce cas, aux problèmes de collage par l'intermédiaire de l'émail. Si les émaux anti-adhésifs permettent généralement d'éviter le collage, ils ne permettent pas de remédier à ces problèmes supplémentaires. Par ailleurs, l'émail étant emprisonné entre les substrats en verre pendant la cuisson, il n'est pas possible de recourir à un courant de gaz contenant de l'oxygène pour oxyder des métaux présents dans l'émail ou améliorer la combustion de la résine de l'émail. Des solutions, dans ce cas, consistent à effectuer des précuissons ou des prébombages des substrats en verre séparés ou placés dans un ordre différent, mais de tels procédés multiplient les étapes de traitement des substrats émaillés.

La présente invention a donc pour but de remédier aux inconvénients précédemment cités et, plus particulièrement, de fournir une solution avantageuse aux problèmes de collage intervenant dans les procédés d'émaillage de substrats en verre, notamment lors du bombage des substrats émaillés, cette solution ne présentant pas les inconvénients précédemment cités.

Ce but est atteint en premier lieu par le procédé d'émaillage de substrats en verre selon l'invention dans lequel on revêt au moins une partie d'un substrat en verre d'une composition d'émail comprenant un mélange de base contenant au moins une fritte de verre, ladite composition comprenant également, pour 100 parts en poids du mélange de base, au moins 3 parts en poids d'au moins un additif sous forme d'un oxyde métallique susceptible de se décomposer aux températures de cuisson en au moins un produit de degré d'oxydation inférieur en vue d'améliorer les propriétés anti-adhésives de la composition, et dans lequel on soumet le substrat émaillé à un traitement thermique de façon à cuire l'émail.

La présente invention consiste également en la composition d'émail utilisée, ladite composition comprenant un mélange de base contenant au moins une fritte de verre, ladite composition comprenant également, pour 100 parts en poids du mélange de base, au moins 3 parts en poids d'au moins un additif sous forme d'un oxyde métallique susceptible de se décomposer aux températures de cuisson en au moins un produit de degré d'oxydation inférieur en vue d'améliorer les propriétés anti-adhésives de la composition.

De préférence, la composition d'émail selon l'invention, mentionnée aux deux paragraphes précédents, comprend un mélange de base contenant au moins une fritte de verre et un médium, le médium permettant l'application et l'adhésion temporaire de l'émail sur les substrats en verre.

Dans la présente invention, on convient d'entendre par « fritte de verre » une composition vitrifiable sous forme de poudre et à base d'oxydes dont éventuellement des pigments ; par « mélange de base » une composition d'émail quelconque servant à l'émaillage de substrats en verre et comprenant au moins une fritte de verre, ladite composition présentant ou non des propriétés anti-adhésives ; par « émail » aussi bien la composition ou pâte d'émail employée pour le dépôt sur le substrat que la couche d'émail sur le substrat à différents stades du procédé de fabrication du substrat émaillé ; par « émail présentant des propriétés anti-adhésives » un émail qui, déposé sur un substrat en verre subissant des opérations de transformation, n'adhère pas aux autres éléments venant à son contact lors desdites opérations et par « températures de cuisson » les températures habituellement utilisées pour la transformation des substrats en verre, notamment pour le bombage si les substrats émaillés sont destinés à être bombés, c'est-à-dire des températures comprises entre 530 et 700°C environ, ou, éventuellement, les températures de cuisson du mélange de base de la composition si celles-ci sont inférieures aux températures de transformation des substrats en verre précitées.

L'ajout d'un additif, sous forme d'un oxyde métallique présentant les caractéristiques mentionnées dans la définition de l'invention, à une composition d'émail quelconque (« mélange de base ») permet de conférer des propriétés anti-adhésives à ladite composition lorsque celle-ci en est dépourvue ou d'améliorer les propriétés anti-adhésives de ladite composition lorsque celle-ci présente de telles propriétés. Cette amélioration semble résulter, sans que cette supposition ne limite pour autant la portée de notre invention, de la réaction de décomposition aux températures de cuisson de l'additif sous forme d'un oxyde métallique en un produit de degré d'oxydation inférieur et/ou de l'apparition du produit de degré d'oxydation inférieur issu de la décomposition de l'additif.

Par ailleurs, l'ajout de l'additif précédemment défini permet de remédier aux inconvénients précédemment cités, liés, notamment, au bombage simultané de plusieurs substrats en verre ou à l'utilisation d'émaux comprenant des métaux oxydables. En effet, l'additif sous forme d'un oxyde métallique présent dans la composition d'émail selon l'invention se décompose aux températures de cuisson en un produit de degré d'oxydation inférieur. Il libère donc de l'oxygène au sein de la composition d'émail pendant ladite cuisson. L'oxygène dégagé permet ainsi, le cas échéant, d'oxyder des composés tels que les métaux contenus dans les émaux anti-adhésifs et/ou de brûler la résine présente dans les compositions d'émail utilisées, même lorsque l'émail se trouve « coincé » entre deux substrats en verre destinés à être bombés simultanément. Cette oxydation et cette combustion de la résine sont d'autant plus rapides et complètes que le dégagement d'oxygène se fait directement au sein de la composition d'émail et que l'additif se trouve uniformément réparti au sein de ladite composition. L'utilisation de l'additif mentionné dans la définition de l'invention permet également l'apport d'oxygène à la composition en toute sécurité et ne nécessite pas de recourir à des dispositifs ou à des étapes supplémentaires de traitement des substrats émaillés, ou de modifier les dispositifs existants de traitement des substrats émaillés.

L'utilisation de l'additif mentionné dans la définition de l'invention procure également d'autres avantages. Notamment, la composition d'émail selon l'invention peut être facilement obtenue à partir de toute composition d'émail connue (« mélange de base ») ou de tout composant de composition d'émail commercialement disponible (notamment de toute fritte de verre habituellement utilisée), en ajoutant simplement l'additif susmentionné, et n'oblige pas à remettre en cause la composition desdites compositions ou desdites frittes pour les applications particulières nécessitant des émaux anti-adhésifs.

L'additif utilisé n'oblige pas, par ailleurs, à modifier les températures de traitement thermique habituelles utilisées pour la cuisson des émaux et/ou pour le bombage des substrats émaillés.

Les substrats en verre revêtus d'émail selon l'invention consistent préférentiellement en une ou plusieurs feuilles de verre, ou vitrages, et peuvent être trempés de façon à présenter des propriétés de résistance mécanique et thermique améliorées. Lorsque les substrats sont bombés et trempés au cours du procédé selon l'invention, la trempe s'opère après le bombage des substrats émaillés, éventuellement au sein d'un même dispositif.

Le mélange de base de la composition d'émail selon l'invention comprend au moins une fritte de verre et éventuellement un médium. La fritte de verre du mélange de base peut être toute fritte de verre connue à base d'oxydes dont éventuellement des pigments. Cette fritte peut notamment comprendre des oxydes choisis parmi les oxydes de zinc, de plomb, de silicium, de titane, de zirconium, de sodium, de bore, de lithium, de potassium, de calcium, d'aluminium, d'étain, de vanadium, de molybdène, de magnésium, de fer, etc... et peut déjà comprendre un additif tel que mentionné dans la définition de l'invention. Cependant, dans ce dernier cas, l'additif contenu initialement dans la fritte de la composition d'émail selon l'invention est traditionnellement présent à des taux et/ou sous une forme ne permettant pas d'obtenir les effets recherchés, notamment l'effet anti-adhésif recherché.

Selon un mode de réalisation particulièrement préféré de la présente invention, la fritte de verre du mélange de base de la composition selon l'invention est une fritte au plomb, c'est-à-dire une fritte comprenant au moins un oxyde de plomb PbO. La proportion dudit oxyde de plomb est avantageusement d'au moins 0,1 % en poids de ladite fritte, de préférence d'au moins 1 % en poids de la fritte et, de façon particulièrement préférée, d'au moins 25 % en poids de la fritte, cette dernière proportion étant représentative de la plupart des frittes dites « au plomb » existant actuellement. De façon générale, les frittes au plomb précédentes se caractérisent également, lorsqu'elles comprennent d'autres oxydes intermédiaires que l'oxyde de plomb tels que l'oxyde de bismuth Bi₂O₅, par des taux de chacun de ces autres oxydes intermédiaires inférieurs à 3 % en poids desdites frittes.

Le médium éventuellement présent dans le mélange de base de la composition d'émail selon l'invention peut consister en tout médium habituellement utilisé dans les compositions d'émail traditionnelles et peut notamment comprendre des solvants, des diluants, des huiles telles que des huiles de pin et autres huiles végétales, des résines telles que des résines acryliques, des fractions de pétrole, des matières filmogènes telles que des matières cellulosiques, etc... La proportion du médium dans la composition prête à être déposée est, de préférence, comprise entre 20 et 40 % en poids de ladite composition.

Comme indiqué précédemment, dans le cas où le médium du mélange de base comprend au moins une résine et où la composition selon l'invention est utilisée pour revêtir des feuilles de verre destinées à être bombées simultanément en vue de réaliser, par exemple, un vitrage feuilleté, l'émail étant déposé sur une face d'une feuille de verre devant être placée au contact d'une autre feuille de verre pendant le bombage simultané des feuilles de verre, la combustion de la résine est favorisée par la présence de l'additif mentionné dans la définition de l'invention. De préférence cependant, dans ce cas particulier, le taux de résine au sein de la composition d'émail selon l'invention ne dépasse pas 1 % en poids et, de préférence, 0,5 % en poids de ladite composition de façon à permettre une combustion entièrement satisfaisante de la résine sans risques d'apparition d'auréoles sur le verre.

Outre la fritte de verre et le médium, le mélange de base de la composition selon l'invention peut comprendre d'autres composants ou additifs, selon la destination des substrats revêtus de ladite composition.

Le mélange de base de la composition d'émail selon l'invention peut ainsi comprendre un ou des métaux oxydables permettant déjà de conférer des propriétés anti-adhésives à ladite composition, notamment dans le cas de l'émaillage de substrats en verre devant être bombés individuellement et éventuellement être trempés, ou dans le cas de l'émaillage de substrats en verre devant être bombés simultanément en vue de réaliser, par exemple, un vitrage feuilleté, l'émail étant déposé sur une face d'un substrat en verre n'étant pas mise au contact d'un autre substrat en verre pendant le bombage simultané des substrats. Ces métaux oxydables sont, par exemple, le zinc ou le fer et sont décrits dans des brevets tels que les brevets EP 0 362 136 et EP 0 466 343. Lorsque ces métaux sont présents dans la composition selon l'invention, leur proportion est, de préférence, comprise entre 5 et 20 parts en poids pour 100 parts en poids de fritte(s) du mélange de base.

Comme indiqué précédemment, du fait du dégagement uniforme d'oxygène au sein de la composition par l'additif mentionné dans la définition de l'invention pendant le traitement thermique des substrats émaillés, l'oxydation des métaux est plus efficace et plus rapide et la productivité peut être améliorée ; de plus, les propriétés anti-adhésives de la composition d'émail sont améliorées par rapport aux propriétés anti-adhésives du mélange de base comprenant les métaux oxydables.

L'additif mentionné dans la définition de l'invention se présente sous forme d'un oxyde métallique susceptible de se décomposer aux températures de cuisson en au moins un produit de degré d'oxydation inférieur en vue d'améliorer les propriétés anti-adhésives de la composition.

Selon un mode de réalisation de l'invention, l'additif en question se présente sous forme d'un oxyde métallique susceptible de se décomposer aux températures de cuisson pour donner un métal réfractaire. Selon un autre mode de réalisation de l'invention, l'additif se présente sous forme d'un oxyde métallique susceptible de se décomposer aux températures de cuisson pour donner un oxyde métallique de degré d'oxydation inférieur.

Comme mentionné dans la définition de l'invention, la composition d'émail selon l'invention comprend au moins 3 parts en poids de l'additif précité pour 100 parts en poids du mélange de base pour obtenir une amélioration des propriétés anti-adhésives de l'émail. Avantageusement et dans la plupart des modes de réalisation de la présente invention, le taux d'additif précité est supérieur à 5 parts en poids et, de façon préférée, supérieur ou égal à 10 parts en poids pour 100 parts en poids du mélange de base afin d'obtenir une amélioration particulièrement importante desdites propriétés anti-adhésives. De préférence également, ce taux n'excède pas 50 parts en poids pour 100 parts en poids du mélange de base, la présence de l'additif précité à des taux supérieurs pouvant nuire à certaines caractéristiques de l'émail et pouvant, notamment, modifier son point de fusion. Par ailleurs, l'additif utilisé présente préférentiellement une granulométrie comprise entre 0,5 et 12 µm compatible avec la granulométrie des compositions d'émail habituellement employées, cette granulométrie ne dépassant pas, de toutes façons, 45 µm lorsque les compositions d'émail selon l'invention sont destinées à être déposées par sérigraphie sur des substrats.

L'additif tel que mentionné dans la définition de l'invention est, de préférence, de l'oxyde de manganèse Mn₂O₃ et/ou du bioxyde de manganèse MnO₂ et/ou du manganate et/ou permanganate tel que le permanganate de potassium KMnO₄ et/ou de l'oxyde de bismuth Bi₂O₃ et/ou du bismuthate tel que le bismuthate de sodium, ces composés se présentant sous une forme permettant d'obtenir les effets recherchés selon l'invention. Dans le cas où le mélange de base de la composition selon l'invention contient au moins un métal oxydable, l'additif tel que mentionné dans la définition de l'invention peut également être avantageusement du Pb₃O₄. De façon particulièrement préférée, l'additif mentionné dans la définition de l'invention est du bioxyde de manganèse et/ou du permanganate et/ou éventuellement du manganate et/ou éventuellement de l'oxyde de manganèse Mn₂O₃.

Dans le procédé d'émaillage de substrats en verre selon l'invention, les émaux sont préférentiellement déposés par sérigraphie sur les substrats puis cuits, la cuisson s'opérant, le cas échéant, pendant le bombage des substrats lorsque lesdits substrats doivent être bombés et/ou préalablement à la trempe lorsque lesdits substrats doivent être trempés, les températures de cuisson et de bombage étant généralement de l'ordre de 600-700°C.

L'application de l'émail peut également se faire par pulvérisation, revêtement au rouleau... et la couche d'émail déposée est préférentiellement soumise, après application, à un séchage à basse température pour fixer temporairement l'émail, par exemple par élimination des diluants du médium servant à l'application de l'émail sur le substrat.

Le bombage des substrats en verre s'opère selon des méthodes connues, par gravité (bombage notamment des substrats en verre par paires en vue de la réalisation de verres feuilletés) ou à l'aide de matrices, l'émail selon l'invention, déposé sur au moins un substrat en verre, n'adhérant pas aux autres substrats en verre (dans le cas du bombage simultané des substrats avec l'émail entre lesdits substrats) ou aux matrices venant à son contact, du fait de ses propriétés anti-adhésives.

Dans le cas où des substrats en verre doivent être bombés simultanément en vue de réaliser, par exemple, des vitrages feuilletés, l'émail est déposé sur au moins un des substrats et les substrats sont assemblés préalablement à l'opération de bombage, puis bombés, les substrats en verre étant ensuite séparés pour insérer au moins un film intercalaire de matière différente, puis le vitrage feuilleté est obtenu par assemblage de l'ensemble à chaud et sous pression.

Les exemples suivants illustrent, de manière non exhaustive, le procédé et la composition d'émail selon l'invention.

### EXEMPLE TÉMOIN 1

La composition d'émail selon cet exemple comprend 100 parts en poids d'une fritte de verre comprenant 16 % en poids de SiO₂, 47 % en poids de PbO et 37 % en poids d'autres oxydes intermédiaires ou formateurs, cette fritte présentant un point de fusion de 620°C, et comprend 25 parts en poids d'un médium à base d'huile de pin comportant 3 % en poids de résine acrylique.

### EXEMPLE TÉMOIN 2

A la composition d'émail précédente, on ajoute 10 parts en poids de fer oxydable Fe.

### EXEMPLE 1

A la composition de l'émail de l'exemple témoin 1, on ajoute 10 parts en poids de bioxyde de manganèse MnO₂.

### EXEMPLE 2

A la composition d'émail de l'exemple témoin 2, on ajoute 20 parts en poids de bioxyde de manganèse MnO₂.

### EXEMPLE 3

A la composition d'émail de l'exemple témoin 2, on ajoute 20 parts en poids d'oxyde de bismuth Bi₂O₃.

Chaque émail selon chacun des exemples témoins 1 et 2 et chacun des exemples 1 à 3 est déposé par sérigraphie sur une feuille de verre puis séché à moins de 100°C.

Chaque feuille de verre émaillée est ensuite bombée à 640°C environ, la cuisson de chacun des émaux s'opérant également à cette température. On observe que les émaux selon l'exemple témoin 2 et selon les exemples 1 à 3 n'adhèrent pas aux matrices de transformation venant à leur contact lors du bombage, alors que l'émail selon l'exemple témoin 1 adhère. De plus, les émaux selon les exemples 2 et 3 présentent de meilleures propriétés anti-adhésives aux températures et pressions habituelles de bombage que l'émail selon l'exemple témoin 2.

### EXEMPLE TÉMOIN 3

La composition d'émail selon cet exemple comprend 100 parts en poids d'une fritte de verre comprenant 12,5 % en poids de SiO₂, 57 % en poids de PbO et 30,5 % en poids d'autres oxydes intermédiaires ou modificateurs, et comprend 25 parts en poids du médium utilisé dans l'exemple 1.

### EXEMPLE 4

A la composition d'émail de l'exemple témoin 3, on ajoute 20 parts en poids de bioxyde de manganèse MnO₂.

Chaque émail selon chacun des exemples 4 et témoin 3 est déposé par sérigraphie sur une feuille de verre puis séché à moins de 100°C. Chaque feuille de verre émaillée est ensuite associée à une seconde feuille de verre, l'émail se trouvant entre les deux feuilles de verre, et l'ensemble est soumis au bombage à des températures de l'ordre de 600°C.

On observe, lors du bombage, que l'émail selon l'exemple témoin 3 adhère à la seconde feuille de verre placée à son contact. On observe également l'apparition d'une auréole entre les deux feuilles de verre, cette auréole étant due à la mauvaise combustion de la résine entre les feuilles de verre. En revanche, l'émail selon l'exemple 4 n'adhère pas, pendant le bombage, à la seconde feuille de verre placée à son contact et on n'observe pas l'apparition d'auréole.

Les émaux selon l'invention sont principalement utilisés pour revêtir des substrats en verre, tels que des vitrages pour l'industrie automobile ou du bâtiment.

## Revendications

1. Composition d'émail pour substrat en verre comprenant un mélange de base contenant au moins une fritte de verre, ladite composition comprenant également, pour 100 parts en poids du mélange de base, au moins 3 parts en poids d'au moins un additif sous forme d'un oxyde métallique, susceptible de se décomposer aux températures de cuisson en au moins un produit de degré d'oxydation inférieur en vue de conférer des propriétés anti-adhésives à la composition ou d'améliorer les propriétés anti-adhésives de la composition, cet oxyde étant choisi parmi les oxydes métalliques suivants : Mn₂O₃, MnO₂, manganate, permanganate, bismuthate et Pb₃O₄.

2. Composition selon la revendication 1, caractérisée en ce que la fritte de verre du mélange de base est une fritte au plomb.

3. Composition selon l'une des revendications 1 ou 2, caractérisée en ce que le mélange de base comprend en outre un médium.

4. Composition selon l'une des revendications 1 à 3, caractérisée en ce que le mélange de base comprend en outre au moins un métal oxydable.

5. Composition selon l'une des revendications 1 à 4, caractérisée en ce qu'elle comprend en outre moins de 1 % en poids de résine.

6. Composition d'émail pour substrat en verre comprenant un mélange de base contenant au moins une fritte de verre, ce mélange de base étant dépourvu de propriétés anti-adhésives ou présentant des propriétés anti-adhésives conférées par un ou des métaux oxydables présents dans ce mélange, ladite composition comprenant également, pour 100 parts en poids du mélange de base, au moins 3 parts en poids d'au moins un additif sous forme d'un oxyde métallique, susceptible de se décomposer aux températures de cuisson en au moins un produit de degré d'oxydation inférieur en vue de conférer des propriétés anti-adhésives à la composition ou d'améliorer les propriétés anti-adhésives de la composition.

7. Utilisation d'un additif sous forme d'un oxyde métallique, susceptible de se décomposer aux températures de cuisson en au moins un produit de degré d'oxydation inférieur, pour libérer de l'oxygène dans une composition d'émail pour substrat en verre comprenant un mélange de base contenant au moins une fritte de verre, à raison d'au moins 3 parts en poids d'additif pour 100 parts en poids du mélange de base.

8. Procédé d'émaillage de substrats en verre selon lequel on revêt au moins une partie d'un substrat en verre d'une composition d'émail selon l'une des revendications 1 à 6 et on soumet le substrat émaillé à un traitement thermique de façon à cuire l'émail.

9. Application du procédé tel que défini dans la revendication 8 à la réalisation de vitrages émaillés bombés et/ou trempés, caractérisée en ce qu'on utilise une composition d'émail telle que définie dans l'une des revendications 1 à 6.

10. Application du procédé tel que défini dans la revendication 8 à la réalisation de vitrages émaillés feuilletés, l'émail étant déposé à l'intérieur du vitrage feuilleté, caractérisée en ce qu'on utilise une composition d'émail telle que définie dans l'une des revendications 1 à 6.

## Claims

1. Enamel composition for a glass substrate comprising a base mixture incorporating at least one glass frit, said composition also incorporating, for 100 parts by weight of the base mixture, at least 3 parts by weight of at least one additive in the form of a metal oxide, which is able to decompose at baking temperatures into at least one product having a lower degree of oxidation with a view to giving anti-adhesive properties to the composition or improve the anti-adhesive properties of the composition, said oxide being chosen from among the following metal oxides: Mn₂O₃, MnO₂, manganate, permanganate, bismuthate and Pb₃O₄.

2. Composition according to claim 1, characterized in that the glass frit of the base mixture is a lead frit.

3. Composition according to one of the claims 1 or 2, characterized in that the base mixture also incorporates a medium.

4. Composition according to one of the claims 1 to 3, characterized in that the base mixture also incorporates at least one oxidizable metal.

5. Composition according to one of the claims 1 to 4, characterized in that it also incorporates at least 1% by weight resin.

6. Enamel composition for a glass substrate comprising a base mixture containing at least one glass frit, said base mixture having no anti-adhesive properties or having anti-adhesive properties given by one or more oxidizable metals present in said mixture, said composition also incorporating, for 100 parts by weight of the base mixture, at least 3 parts by weight of at least one additive in the form of a metal oxide able to decompose at baking temperatures into at least one product having a lower degree of oxidation with a view to giving anti-adhesive properties to the composition or for improving the anti-adhesive properties of the composition.

7. Use of an additive in the form of a metal oxide able to decompose at the baking temperatures into at least one product having a lower degree of oxidation, in order to release oxygen into an enamel composition for a glass substrate incorporating a base metal containing at least one glass frit, at the rate of at least 3 parts by weight of additive for 100 parts by weight of the base mixture.

8. Process for enamelling glass substrates according to which at least part of the glass substrate is coated with an enamel composition according to one of the claims 1 to 6 and the enamelled substrate undergoes a heat treatment in order to bake the enamel.

9. Application of the process as defined in claim 8 to the production of bent and/or tempered, enamelled glazings, characterized in that use is made of an enamel composition as defined in one of the claims 1 to 6.

10. Application of the process as defined in claim 8 to the production of laminated, enamelled glazings, the enamel being deposited in the interior of the laminated glazing, characterized in that use is made of an enamel composition as defined in one of the claims 1 to 6.

## Patentansprüche

1. Emailzusammensetzung für ein Glassubstrat, welche ein Grundgemisch umfaßt, das wenigstens eine Glasfritte enthält, wobei diese Zusammensetzung auf 100 Gew.-Teile Grundgemisch auch wenigstens 3 Gew.-Teile mindestens eines Zusatzstoffs in Form eines Metalloxids umfaßt, das in der Lage ist, sich bei Einbrenntemperaturen zu mindestens einem Produkt mit niedrigerer Oxidationsstufe zu zersetzen, um der Zusammensetzung Antihafteigenschaften zu verleihen oder deren Antihafteigenschaften zu verbessern, wobei dieses Oxid aus den Oxiden Mn₂O₃, MnO₂, Manganat, Permanganat, Wismutat und Pb₃O₄ ausgewählt ist.

2. Zusammensetzung nach Anspruch 1, **dadurch gekennzeichnet, daß** die Glasfritte des Grundgemischs eine bleihaltige Fritte ist.

3. Zusammensetzung nach Anspruch 1 oder 2, **dadurch gekennzeichnet, daß** das Grundgemisch außerdem ein Medium enthält.

4. Zusammensetzung nach einem der Ansprüche 1 bis 3, **dadurch gekennzeichnet, daß** das Grundgemisch darüber hinaus mindestens ein oxidierbares Metall enthält.

5. Zusammensetzung nach einem der Ansprüche 1 bis 4, **dadurch gekennzeichnet, daß** sie zusätzlich weniger als 1 Gew.-% Harz enthält.

6. Emailzusammensetzung für ein Glassubstrat, welche ein Grundgemisch umfaßt, das wenigstens eine Glasfritte enthält und keine Antihafteigenschaften besitzt oder Antihafteigenschaften aufweist, die von einem oder mehreren oxidierbaren Metallen verliehen werden, die in diesem Gemisch vorhanden sind, wobei diese Zusammensetzung auf 100 Gew.-Teile Grundgemisch auch wenigstens 3 Gew.-Teile mindestens eines Zusatzstoffs in Form eines Metalloxids umfaßt, das in der Lage ist, sich bei Einbrenntemperaturen zu mindestens einem Produkt mit niedrigerer Oxidationsstufe zu zersetzen, um der Zusammensetzung Antihafteigenschaften zu verleihen oder deren Antihafteigenschaften zu verbessern.

7. Verwendung eines Zusatzstoffs in Form eines Metalloxids, das in der Lage ist, sich bei Einbrenntemperaturen zu mindestens einem Produkt mit niedrigerer Oxidationsstufe zu zersetzen, um Sauerstoff in eine Emailzusammensetzung für ein Glassubstrat abzugeben, die ein mindestens eine Glasfritte enthaltendes Grundgemisch umfaßt, mit einem Verhältnis von wenigstens 3 Gew.-Teilen Zusatzstoff auf 100 Gew.-Teile Grundgemisch.

8. Verfahren zum Emaillieren von Glassubstraten, gemäß welchem mindestens ein Teil eines Glassubstrats mit einer Emailzusammensetzung nach einem der Ansprüche 1 bis 6 beschichtet und das emaillierte Substrat derart einer Wärmebehandlung unterzogen wird, daß das Email einbrennt.

9. Anwendung des wie im Anspruch 8 definierten Verfahrens auf die Herstellung gebogener und/oder vorgespannter emaillierter Glasscheiben, **dadurch gekennzeichnet, daß** eine wie in einem der Ansprüche 1 bis 6 definierte Emailzusammensetzung verwendet wird.

10. Anwendung des wie im Anspruch 8 definierten Verfahrens auf die Herstellung emaillierter Verbundverglasungen, wobei das Email im Inneren der Verbundverglasung aufgebracht wird, **dadurch gekennzeichnet, daß** eine wie in einem der Ansprüche 1 bis 6 definierte Emailzusammensetzung verwendet wird.
